# EUROPEAN PATENT APPLICATION

(11) **EP 2 249 248 A1**
(43) Date of publication of application: **10.11.2010**
(21) Application number: 09177805.0
(22) Date of filing: 02.12.2009
(51) Int. Cl.: G06F 9/44, H04N 5/445

(54) **Image processing apparatus and method**

(30) Priority: 06.05.2009 KR 20090039318
(71) Applicant: SAMSUNG ELECTRONICS CO., LTD., Suwon-si Gyeonggi-do 442-742 (KR)
(72) Inventor: Seong, Hye-young, Suwon-si Gyeonggi-do (KR); Park, Jong-chan, Seoul (KR); Shim, Bo-kyung, Seoul (KR); Yim, Jin-ho, Suwon-si Gyeonggi-do (KR)
(74) Representative: Fearnside, Andrew Simon

(57) **Abstract**

Disclosed is an image processing apparatus including: a video processor which processes and displays an image; a user input unit which allows a user to input his/her selection; and a controller which sets up a plurality of size units for a user interface and controls the video processor to display the user interface in an area occupied with the size unit selected corresponding to the user's selection. Thus, it is possible to provide a user interface employing a layout and interaction proper to a CE apparatus such as a TV or the like.

## Description

### BACKGROUND OF INVENTION

### 1. Field of Invention

Apparatuses and methods consistent with exemplary embodiments of the present invention relate to an image processing apparatus and method, and more particularly though not exclusively to an image processing apparatus and method capable of providing a user interface employing a layout and interaction proper to a consumer electronic (CE) apparatus such as a television (TV) or the like.

### 2. Description of the Related Art

As network communication is enabled in a CE apparatus, various contents are viewable and the CE apparatus's own functions have also become diverse. The more functions, the more difficult to search and use a function through a conventional menu system.

Under such an environment, an interface from an application concept is more convenient to use, called a widget. The widget refers to a small graphic user interface (GUI) device that operates an application program and displays results thereof on a screen. However, since the widget is an interface system developed from a personal computer (PC) environment, there are lots of inconvenience in applying the existing widget system to the CE apparatus such as a TV.

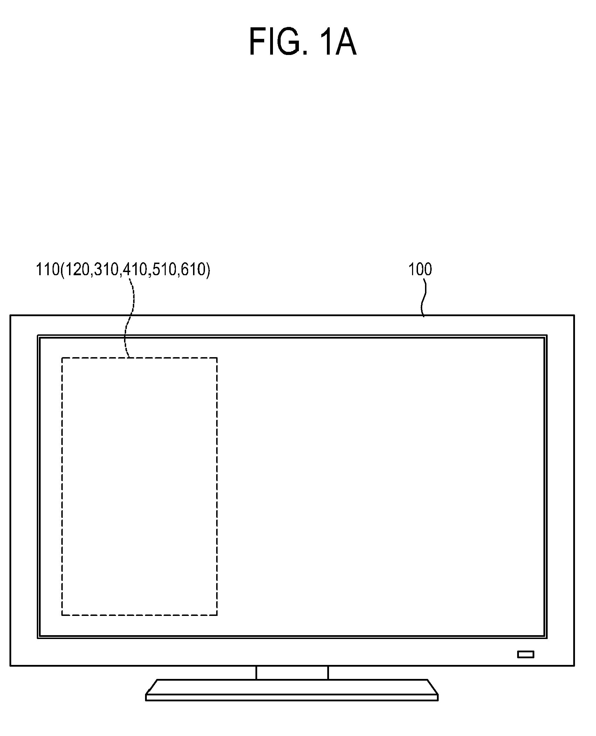

FIG. 1A illustrates an example of a screen where the widget is displayed.

As shown in FIG. 1A, a widget execution window 110, 410, 510 or a widget gallery window 120, 310, 610 may be displayed on a partial area of a full screen in a CE apparatus 100.

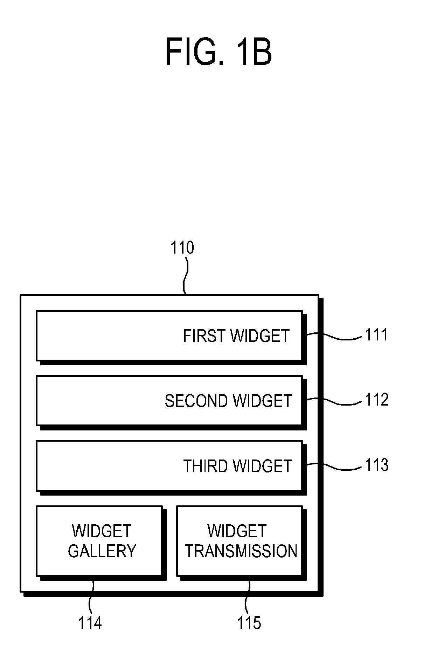

The widget execution window 110, 410, 510 or the widget gallery window 120, 310, 610 shown in FIGs. 1B through 1D and FIGs. 3 through 6 are displayed on a partial area of the full screen in the CE apparatus 100 like those shown in FIG. 1A.

FIG. 1B shows the widget execution window.

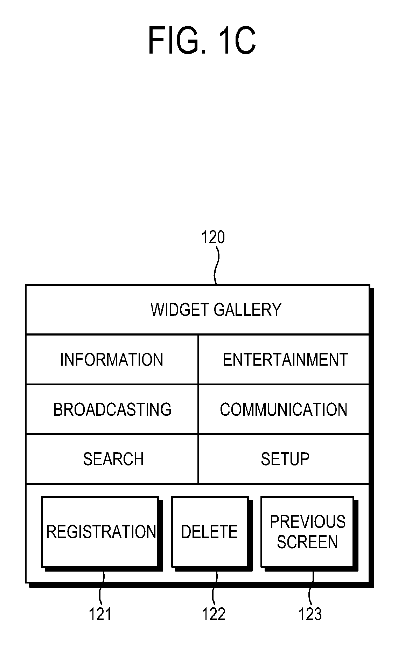

If a user executes the widget, the widget execution window 110 is displayed on an area of the screen in the CE apparatus 100. The widget execution window 110 may include a plurality of widgets such as a first widget 111, a second widget 112 and a third widget 113, previously registered by a user; a menu of a widget gallery 114; and a menu of a widget transmission 115. In each of the first widget 111, the second widget 112 and the third widget 113, basic and simple information about the corresponding widget may be displayed. In this case, if a user selects a certain widget, the widget execution window 110 shows detailed information about the selected widget. Meanwhile, a user selects the menu of the widget gallery 114, the CE apparatus 100 displays the widget gallery window 120 as shown in FIG. 1C instead of the widget execution window 110. Also, if a user selects the menu of the widget transmission 115, the CE apparatus 100 communicates with a content providing server and receives information about the selected widget or update.

Referring to FIG. 1B, the first widget 111, the second widget 112 and the third widget 113 displayed in the widget execution window 110 are set up to have the same size. Therefore, there is no way to set up the sizes different according to the widgets in response to a user's preference.

FIG. 1C illustrates the widget gallery window.

If a user selects the menu of the widget gallery 114 through the widget execution window 110 shown in FIG. 1B, the CE apparatus 100 displays the widget gallery window 120 instead of the widget execution window 110 in the screen. The widget gallery window 120 may include a list of widgets displayable in the widget execution window 110, and a widget edit menu. Referring to FIG. 1C, the widgets displayable in the widget execution window 110 are classified into categories such as information, entertainment, broadcasting, communication, search, setup, etc. Further, the widget edit menu includes menus of registration 121, delete 122, and previous screen 123. The menu of registration 121 is to display the selected widget on the widget execution window 110, and the menu of delete 122 is to delete the selected widget from the widget execution window 110. Further, the menu of previous screen 123 is to move to a previous screen. That is, the CE apparatus 100 displays the widget execution window 110 again as the previous screen on the screen.

A user selects a certain widget through the widget gallery window 120 and registers it to the widget execution window 110. Then, it is possible to move to the widget execution window 110 where the selected widget is registered. Therefore, there is no method to previously see how the widget to be registered will be displayed on the widget execution window 110.

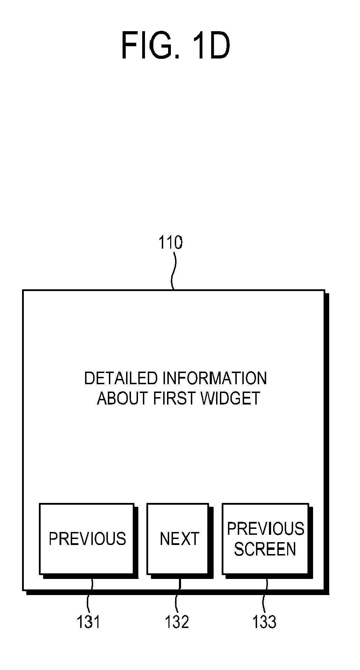

FIG. 1D illustrates that detailed contents of the selected widget are displayed on the widget execution window.

If a user selects the first widget 111 on the widget execution window 110 shown in FIG. 1B, the widget execution window 110 displays detailed information about the first widget 111. In this case, if there are contents corresponding to many pages, a user turns to pages through menus of previous 131 and next 132.

If a user wants to view detailed contents of the second widget 112, he/she has to move to an initial screen of the widget execution window 110 through a menu of previous screen 133 and select the second widget 112 again. In other words, to view detailed contents of the plural widgets, a user has to perform many operations. This inconvenience can be solved by integrating and displaying widgets desired by a user into a single widget. However, at the moment, the plural widgets cannot be integrated and displayed into a single widget.

Like this, the existing widget system developed from the PC environment is inconvenient to be directly used in the CE apparatus such as the TV or the like. That is, since the CE apparatus such as the TV or the like is different from the PC in an input unit and manner, there are needed a layout and interaction different from those for the PC.

### SUMMARY OF THE INVENTION

Accordingly, an aspect of the present invention preferably is to provide a user interface employing a layout and interaction proper to a CE apparatus such as a TV or the like.

In accordance with an exemplary embodiment of the present invention, there is provided an image processing apparatus including: a video processor which processes and displays an image; a user input unit which allows a user to input a selection of the user; and a controller which sets up a plurality of size units for a user interface and controls the video processor to display the user interface in an area including a selected the size unit of the plurality of size units, corresponding to the user's selection.

According to an aspect of the invention, the selected size unit may be configured to correspond to an integer multiple of a regular interval by which the area is divided, the area being where the user interface is displayed or the image is displayed.

According to an aspect of the invention, the controller may control the video processor to set up the plurality of size units with respect to a kind of the user interface.

According to an aspect of the invention, when editing the user interface, the controller may control the video processor to display both an edit menu for the user interface and the area where the user interface is displayed.

According to an aspect of the invention, the controller may control the video processor to display a section divided at regular intervals on the area where the user interface is displayed or the area where the image is displayed.

According to an aspect of the invention, the controller may control the video processor to merge and display contents corresponding to at least one user interface.

According to an aspect of the invention, the controller may set up a plurality of positions for the user interface and control the video processor to display the user interface in the position selected corresponding to the user's selection.

According to an aspect of the invention, the user interface may include a widget, an application program, an on screen display (OSD), or a combination thereof.

In accordance with an exemplary embodiment of the present invention, there is provided an image processing method including: setting up a plurality of size units for a user interface; allowing a user to input a selection of the user; and displaying the user interface in an area including a selected size unit of the plurality of size units, corresponding to the user's selection.

According to an aspect of the invention, the selected size unit may be configured to correspond to an integer multiple of a regular interval by which the area is divided, the area being where the user interface is displayed or the image is displayed.

According to an aspect of the invention, a plurality of size units may be set up with respect to the same kind of the user interface.

According to an aspect of the invention, when editing the user interface, both an edit menu for the user interface and the area where the user interface is displayed may be displayed.

According to an aspect of the invention, a section divided at regular intervals may be displayed on the area where the user interface is displayed or on the area where the image is displayed.

According to an aspect of the invention, contents corresponding to at least one user interface may be merged and displayed.

According to an aspect of the invention, a plurality of positions for the user interface may be set up, and the user interface may be displayed in the position selected corresponding to the user's selection.

According to an aspect of the invention, the user interface may include a widget, an application program, an on screen display (OSD), or a combination thereof.

### BRIEF DESCRIPTION OF THE DRAWINGS

The above and/or other aspects of exemplary embodiments of the present invention will become apparent and more readily appreciated from the following description of the exemplary embodiments, taken in conjunction with the accompanying drawings, in which:

FIG. 1A illustrates an example of a screen where a widget is displayed;

FIG. 1B illustrates a widget execution window;

FIG. 1C illustrates a widget gallery window;

FIG. 1D illustrates that detailed contents of a selected widget is displayed on the widget execution window;

FIG. 2 illustrates a configuration of an image processing apparatus according to an exemplary embodiment of the present invention;

FIG. 3 illustrates a configuration of a widget gallery window according to an exemplary embodiment of the present invention;

FIG. 4 illustrates a configuration of a widget execution window according to an exemplary embodiment of the present invention;

FIG. 5 illustrates a widget execution window and a widget gallery window simultaneously displayed according to another exemplary embodiment of the present invention;

FIG. 6 illustrates a configuration of a widget gallery window according to still another exemplary embodiment of the present invention; and

FIG. 7 illustrates an image processing method according to an exemplary embodiment of the present invention.

### DETAILED DESCRIPTION OF EXEMPLARY EMBODIMENTS OF THE

### INVENTION

Below, exemplary embodiments of the present invention will be described in detail with reference to accompanying drawings so as to be easily realized by a person having ordinary knowledge in the art. The present invention may be embodied in various forms without being limited to the exemplary embodiments set forth herein. Descriptions of well-known parts are omitted for clarity, and like reference numerals refer to like elements throughout.

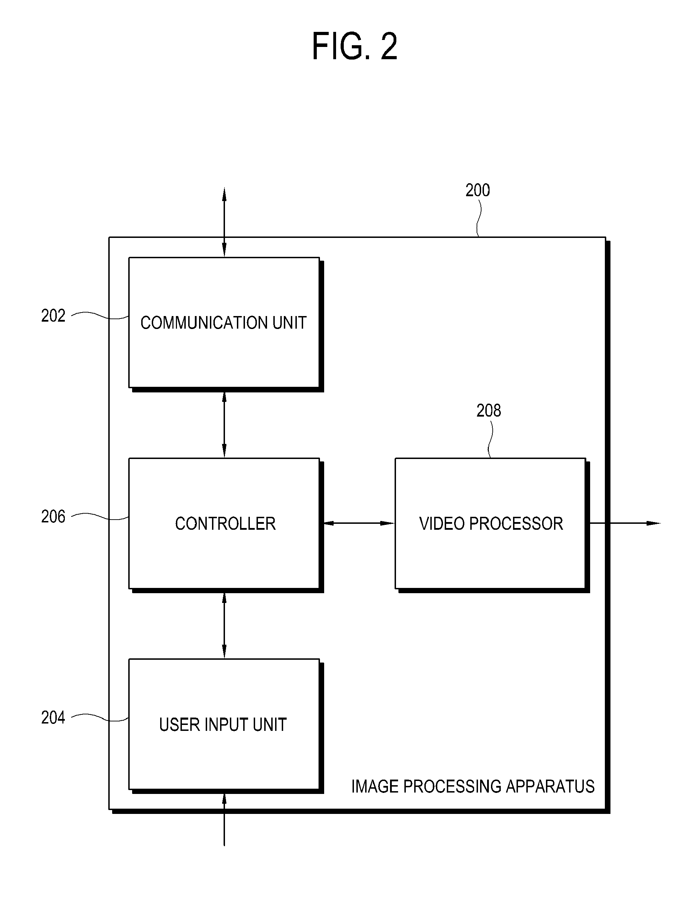

FIG. 2 illustrates a configuration of an image processing apparatus according to an exemplary embodiment of the present invention.

An image processing apparatus 200 in this embodiment may be achieved by a digital TV, a set-top box, a digital versatile disc (DVD) player, a mobile terminal, a personal digital assistant (PDA), etc. Further, the image processing apparatus 200 in this exemplary embodiment may be achieved by a CE apparatus as long as it can perform communication with a content providing server through a network and be controlled by an input device such as a remote controller or the like.

The image processing apparatus 200 in this exemplary embodiment may include a communication unit 202, a user input unit 204, a controller 206, and a video processor 208.

The communication unit 202 can communicate with the content providing server. In this case, the communication unit 202 may receive data from the content providing server. According to the present exemplary embodiment, the communication may be based on an Internet protocol (IP).

Also, the communication unit 202 may receive a broadcasting signal from a broadcasting station. To this end, the communication unit 202 may include a tuner (not shown) to select broadcasting of a desired channel from the received broadcasting signal, and a demodulator (not shown) to demodulate the broadcasting signal tuned by the tuner into an original signal.

The user input unit 204 allows a user to input his/her selection. Specifically, the user input unit 204 may receive the user's selection through an external input device capable of remotely controlling the image processing apparatus 200 or through an input button provided in the image processing apparatus 200. The external input device may be achieved by a remote controller or the like. In this case, a user may input instruction about a user interface through the external input device or the input button.

The user interface mentioned herein is a concept of a graphic device that operates an application program and displays results thereof on a screen. The user interface may include a widget, an application program, an on screen display (OSD), etc. For convenience, the widget will be described as an example of the user interface.

The controller 206 may control the video processor 208 to set up a plurality of size units for the user interface that is displayed. The size unit may be configured to correspond to an integer multiple of a regular interval of a divided area where the user interface is displayed or an area where an image is displayed. Specifically, the individual size unit may be set up to correspond to the integer multiple of a minimum unit area obtained by dividing the area where the user interface is displayed, i.e., the widget execution window by a certain grid. Also, the area where the image is displayed, i.e., the full screen is divided by a certain grid, and the size unit is set up to correspond to the integer multiple of a minimum divided unit area.

In this case, the controller 206 may control the video processor 208 to set up the plurality of size units with respect to the same kind of the user interface. Specifically, the controller 206 may control the video processor 208 to set up the size units where the same kind of the user interface can be displayed by a first size unit, a second size unit, a third size unit, a fourth size unit, and so on. Here, the first size unit may correspond to one times of the minimum divided unit area, the second size unit may correspond to two times of the minimum divided unit area, the third size unit may correspond to three times of the minimum divided unit area, and the fourth size unit may correspond to four times of the minimum divided unit area.

The controller 206 may control the video processor 208 to display the user interface on an area occupied by the size unit selected in response to a user's selection. For example, if a user selects a weather widget of the second size unit, the controller 206 controls the video processor 208 to display the weather widget on the size area corresponding to two times of the minimum divided unit area.

According to another exemplary embodiment, the controller 206 may control the video processor 208 to display both the area where the user interface is displayed and the edit menu for the user interface when editing the user interface. In this case, the controller 206 may control the video processor 208 to display a section divided at regular intervals on the area where the user interface is displayed or the area where the image is displayed.

According to still another exemplary embodiment, the controller 206 may control the video processor 208 to merge and display contents of at least one user interface. Thus, information about many widgets selected by a user may be configured as a single widget. In general, the widget displayed on the widget execution window shows only basic and simple information. To view detailed and much information, a user has to enter the detailed information of each widget through interaction, for example, by selecting an okay button, or the like. Accordingly, to ascertain the detailed contents with respect to a plurality of widgets, it is inconvenient for a user to manipulate the remote controller since many inputs are needed. On the other hand, according to the foregoing exemplary embodiment, a user can ascertain the contents merged corresponding to the plurality of widgets at a time. Therefore, the problem described with reference to FIG. 1D can be solved.

According to yet another exemplary embodiment, the controller 206 set up a plurality of positions for a user interface, and controls the video processor 208 to display the user interface selected in response to a user's selection.

The video processor 208 process and display an image under control of the controller 206. To this end, the video processor 208 may be achieved by a liquid crystal display (LCD), an organic light emitting diode (OLED), a plasma display panel (PDP), etc.

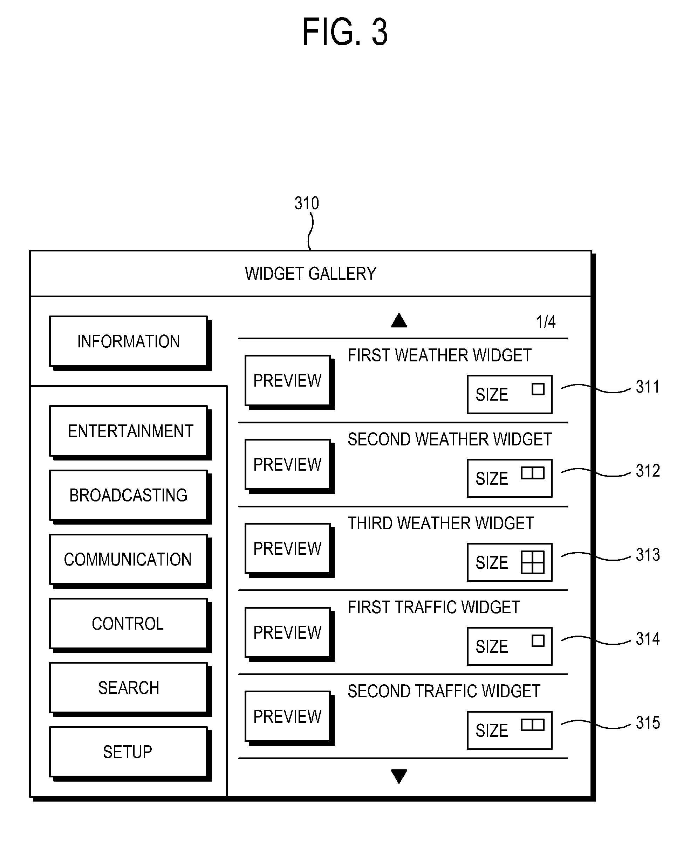

FIG. 3 illustrates a configuration of a widget gallery window according to an exemplary embodiment of the present invention.

The widget gallery window 310 shows the list of widgets which can be registered to the widget execution window. The list of the widgets is transmitted from the content providing server. A user may select a desired widget from the list, and register it to the widget execution window. Also, a user may delete or modify the widget previously registered to the widget execution window.

The widget gallery window 310 shows a plurality of size units set up with respect to the same kind of the user interface. Specifically, the size units where the same kind of the user interface can be displayed, i.e., the first size unit, the second size unit, the third size unit and the fourth size unit may be displayed in the form of icons, respectively. For example, as shown in FIG. 3, the first size unit may be displayed as a single square icon, and the second size unit may be displayed as two square icons. In this case, a first weather widget 311 is a weather widget corresponding to the first size unit, a second weather widget 312 is a weather widget corresponding to the second size unit, and a third weather widget 313 is a weather widget corresponding to the fourth size unit.

In this case, a user selects a desired size unit among the plural size units set up with respect to the same kind of the user interface, and sets up the user interface to have a desired size according to his/her preference through only one operation.

Under the PC environment, it is possible to freely adjust the size of the user interface using mouse. However, there is no function of adjusting the size of the user interface in the CE apparatus such as the TV or the like controlled by the remote controller or a button input, or it is troublesome since many button inputs are needed even though there is the function of adjusting the size. Thus, if the widget gallery window is displayed as shown in FIG. 3, a user may variously set up the size according to the widgets in response to his/her preference through only one input operation. Therefore, the problem described with reference to FIG. 1B can be solved.

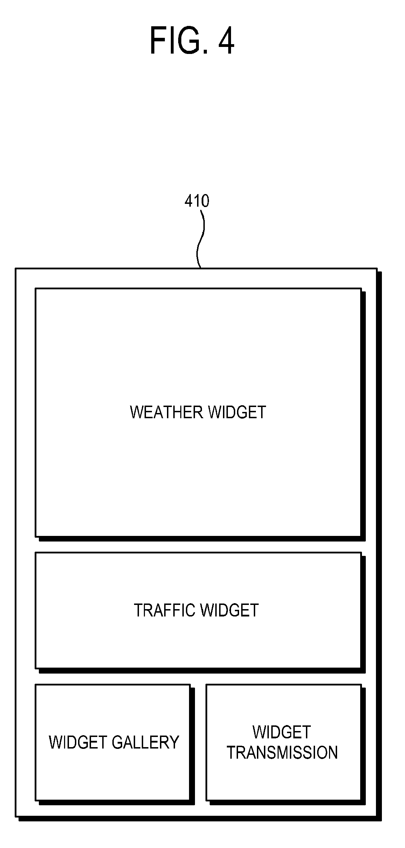

FIG. 4 illustrates a configuration of a widget execution window according to an exemplary embodiment of the present invention.

In FIG. 4, it is assumed that a user selects a third weather widget 313 and a second traffic widget 315 in the widget gallery window 310 described in FIG. 3. The widget execution window 410 displays a plurality of widgets registered by users. The widget execution window 410 includes an area where the plurality of widgets is displayed, a menu of widget gallery, and a menu of widget transmission.

In this exemplary embodiment, the widget execution window 410 is divided at regular intervals, and the plurality of widgets have the sizes corresponding to the integer multiple of the regular interval. Thus, the image processing apparatus 200 may arrange the widget corresponding to the size unit selected by a user adaptively in an empty area of the widget execution window 410. Referring to FIG. 4, the third weather widget and the second traffic widget selected by a user are properly arranged in certain areas of the widget execution window 410.

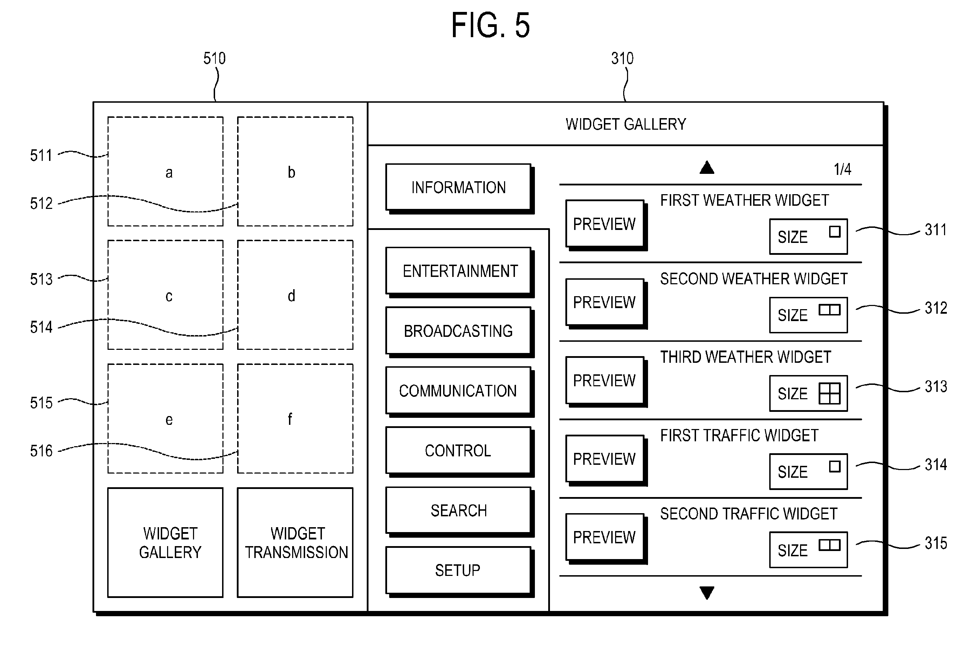

FIG. 5 illustrates a widget execution window and a widget gallery window simultaneously displayed according to another exemplary embodiment of the present invention.

In this exemplary embodiment, the same layout as the widget execution window is displayed when editing the widget, so that a user can easily register or delete the widget. In this case, as shown in FIG. 5, the layouts of the widget gallery window 310 and the widget execution window 510 are displayed on the screen at a time. Specifically, the image processing apparatus 200 may display a section divided at regular intervals on the area where the widget is displayed, i.e., the widget execution window 510. In the widget execution window 510, a plurality of sections divided at regular intervals, i.e., an "a" section 511, a "b" section 512, a "c" section 513, a "d" section 514, an "e" section 515, and an "f" section 516 may be shown with dotted lines. Meanwhile, a user may previously determine a rough position on the widget execution window 510, where the user interface will be arranged, by referring to the icon showing the size unit displayed on the widget gallery window 310. For example, the icon for the third weather widget 313 includes four squares, and therefore it will be appreciated that the third weather widget 313 is displayed in the area having the "a" section 511, the "b" section 512, the "c" section 513 and the "d" section 514 or the area having the "c" section 513, the "d" section 514, the "e" section 515 and the "f" section 516. Further, since the selected widget is directly displayed on the widget execution window 510 when a user registers the selected widget, it is possible to instantly change if not a desired position. Thus, it is possible to easily set up the widget execution window corresponding to a user's intention. Therefore, the problem described with reference to FIG. 1C can be solved.

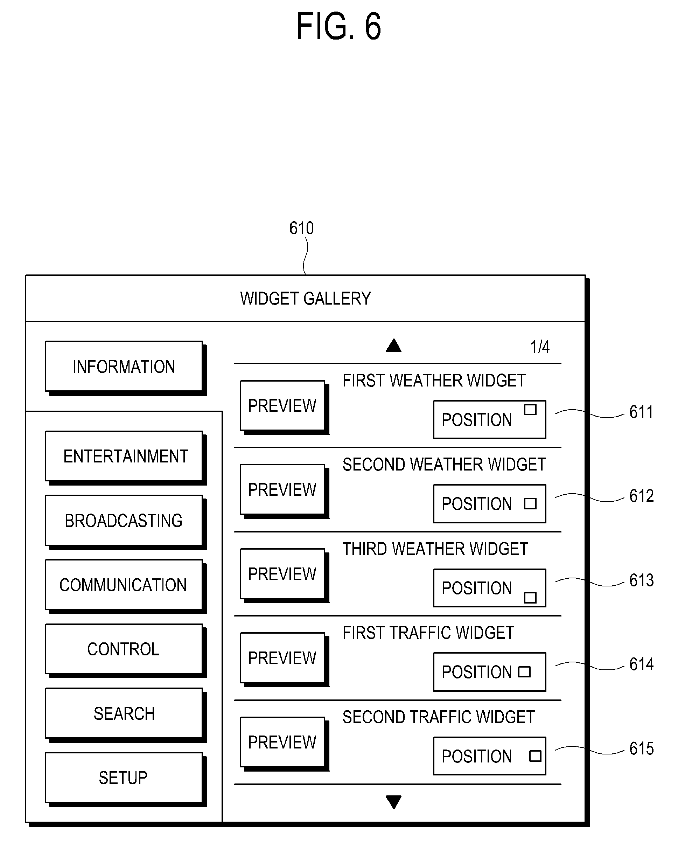

FIG. 6 illustrates a configuration of a widget gallery window according to still another exemplary embodiment of the present invention.

The widget gallery window 610 displays a plurality of positions set up with respect to the same kind of the user interface. Specifically, positions where the same kind of the user interface can be displayed, i.e., a first position 611 (top), a second position 612 (middle), a third position 613 (bottom), a fourth position 614 (left) and a fifth position 615 (right) are displayed in the form of icons, respectively. For example, as shown in FIG. 6, the first position may be displayed as a square icon on the top, the second position may be displayed as a square icon on the middle, the third position may be displayed as a square icon on the bottom, the fourth position may be displayed as a square icon on the left, and the fifth position may be displayed as a square icon on the right. In this case, since the first weather widget 611 is displayed on the first position 611, it is arranged on the top of the widget execution window. Also, the second weather widget 612 is displayed on the second position 612, it is arranged on the middle of the widget execution window.

Meanwhile, the positions where the same kind of the user interface can be displayed, that is, the first position (top), the second position (middle), the third position(bottom), the fourth position (left) and the fifth position (right) may be displayed as characters, respectively. Alternatively, characters of "top," "middle," "bottom," "left" and "right" may be displayed instead of square-shaped icons different in position.

Therefore, a user may select a desired position among the plural positions set up with respect to the same kind of the user interface. Thus, a user can arrange the user interface in a desired position within the widget execution window according to his/her preference through only one operation.

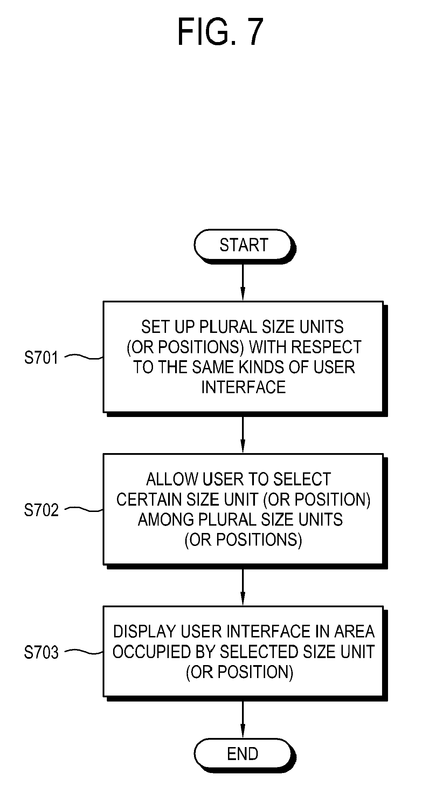

FIG. 7 illustrates an image processing method according to an exemplary embodiment of the present invention.

The image processing apparatus 200 sets up the plural size units (or positions) with respect to the same kind of the user interface in operation S701. Here, the image processing apparatus 200 may display the size units where the same kind of the user interface can be displayed, i.e., the first size unit, the second size unit, the third size unit and the fourth size unit in the form of icons, respectively. Further, the image processing apparatus 200 may display the positions where the same kind of the user interface can be displayed, i.e., the first position (top), the second position (middle), the third position (bottom), the fourth position (left) and the fifth position (right) in the form of icons, respectively.

Then, a user selects a certain size unit (or position) among the plural size units (or positions) in operation S702. In this case, the image processing apparatus 200 displays the user interface in the area occupied with the selected size unit (or position) in operation S703.

Thus, a user can readily set up the size and the position of the user interface.

As described above, the exemplary embodiments of the present invention provides a user interface employing a layout and interaction proper to a CE apparatus such as a TV or the like. Specifically, widgets can be freely arranged by a basic grid unit. Also, it is easy to search a list of widgets that will be registered and to register and delete the widget through a widget gallery, when editing the widgets. Thus, it is possible to display the widget properly to the CE apparatus.

Although a few exemplary embodiments of the present invention have been shown and described, it will be appreciated by those skilled in the art that changes may be made in these embodiments without departing from the principles and spirit of the invention, the scope of which is defined in the appended claims and their equivalents.

## Claims

1. An image processing apparatus (200) comprising:
a video processor (208) which processes and displays an image;
a user input unit (204) which allows a user to input a selection of the user; and
a controller (206) which sets up a plurality of size units for a user interface and controls the video processor to display the user interface in an area including a selected size unit of the plurality of size units, corresponding to the user's selection.

2. The image processing apparatus according to claim 1, wherein the selected size unit is configured to correspond to an integer multiple of a regular interval by which the area is divided, the area being where the user interface is displayed or the image is displayed.

3. The image processing apparatus according to claim 1, wherein the controller controls the video processor to set up the plurality of size units with respect to a kind of the user interface.

4. The image processing apparatus according to claim 1, wherein, when editing the user interface, the controller controls the video processor to display an edit menu for the user interface and the area where the user interface is displayed.

5. The image processing apparatus according to claim 1, wherein the controller controls the video processor to display a section divided at regular intervals on the area where the user interface is displayed or the area where the image is displayed.

6. The image processing apparatus according to claim 1, wherein the controller controls the video processor to merge and display contents corresponding to at least the user interface.

7. The image processing apparatus according to claim 1, wherein the controller sets up a plurality of positions for the user interface and controls the video processor to display the user interface in a position selected corresponding to the user's selection.

8. The image processing apparatus according to claim 1, wherein the user interface comprises a widget, an application program or an on screen display (OSD).

9. An image processing method comprising:
setting up a plurality of size units for a user interface (S701);
allowing a user to input a selection of the user (S702); and
displaying the user interface in an area including a selected size unit of the plurality of size units, corresponding to the user's selection (S703).

10. The image processing method according to claim 9, wherein the selected size unit is configured to correspond to an integer multiple of a regular interval by which the area is divided, the area being where the user interface is displayed or the image is displayed.

11. The image processing method according to claim 9, wherein the plurality of size units is set up with respect to a kind of the user interface.

12. The image processing method according to claim 9, wherein, when editing the user interface, an edit menu for the user interface and the area where the user interface is displayed are displayed.

13. The image processing method according to claim 9, wherein a section divided at regular intervals is displayed on the area where the user interface is displayed or on the area where the image is displayed.

14. The image processing method according to claim 9, wherein contents corresponding to at least the user interface are merged and displayed.

15. The image processing method according to claim 9, wherein a plurality of positions for the user interface is set up, and the user interface is displayed in a position selected corresponding to the user's selection.
